# EUROPÄISCHE PATENTSCHRIFT

(11) **EP 1 155 549 B1**
(45) Veröffentlichungstag und Bekanntmachung des Hinweises auf die Patenterteilung: **20.04.2005**
(21) Anmeldenummer: 00914029.4
(22) Anmeldetag: 14.02.2000
(51) Int. Cl.: H04L 29/06

(54) **VERFAHREN ZUM ÜBERTRAGEN VON ETHERNET-FRAMES**
METHOD OF TRANSMITTING ETHERNET FRAMES
PROCEDE DE TRANSMISSION DE BLOCS ETHERNET

(30) Priorität: 26.02.1999 DE 19908510
(43) Veröffentlichungstag der Anmeldung: 21.11.2001
(73) Patentinhaber: SIEMENS AKTIENGESELLSCHAFT, 80333 München (DE)
(72) Erfinder: KRÖGER, Reinhold, D-53560 Vettelschoss (DE); THOSS, Marcus, D-65185 Wiesbaden (DE)
(86) Internationale Anmeldenummer: PCT/DE2000/000420
(87) Internationale Veröffentlichungsnummer: WO 2000/052706

(56) Entgegenhaltungen:
- EP-A- 0 771 096
- US-A- 5 745 685
- BRUCE BOYES: "Hard real-time connectivity: It's in the CAN" COMPUTER DESIGN, XP002147233 Verfügbar von Internet:<http://www.computer-design.com/e ditorial/1997/embedded/197emcan.html> January 1997

## Beschreibung

Die vorliegende Erfindung betrifft ein Verfahren zum Übertragen von Ethernet-Frames.

Dokument EP0771096 offenbart ein Verfahren zur Übertragung von Ethernet-Frames über das ATM(Asynchronous Transfert Mode)-Protokoll. Die Aufgabe der vorliegenden Erfindung besteht darin, eine Möglichkeit zu schaffen, mit der eine Übertragung von Ethernet-Frames mit Hilfe des Controller Area Network Busses (CAN) gelingt. Das Dokument von Bruce Boyes:"Hard Real-Time Connectivity: it's in the CAN", 1997, computer design, beschreibt die schwierigkeiten Ethernet-Frames über den CAN-Bus zu übertragen zeigt aber keine Lösungmoglichkeiten.

Gemäß der Erfindung wird diese Aufgabe durch ein Verfahren mit den Merkmalen des Anspruchs 1 gelöst.

Ein Ausführungsbeispiel der Erfindung wird nachfolgend beschrieben:

Darin zeigt:
- FIG 1: das sogenannte CAN Frame-Format,
- FIG 2: eine Grobarchitektur des erfindungsgemäßen Systems,
- FIG 3: ein IP- / ARP-Paket im Ethernet-Frame,
- FIG 4: die Verwaltung der CAN Object Identifier durch einen COB-ID-Server,
- FIG 5: MAC-Adressen von CAN-Knoten,
- FIG 6: die Registrierung eines Teilnehmers beim COB-ID-Server,
- FIG 7: die Zuteilung einer Punkt-zu-Punkt -COB-ID und

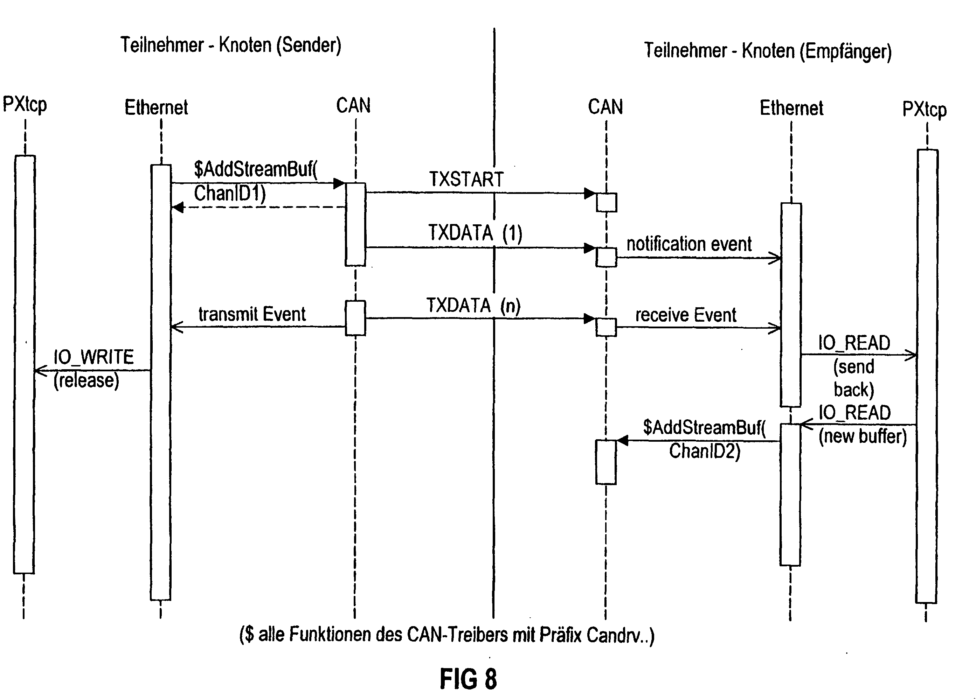

- FIG 8: die Übertragung eines Ethernet-Frames.

Im folgenden werden ausschließlich die für das weitere Verständnis unbedingt notwendigen Eigenschaften des CAN-BusProtokolls skizziert. Eine detailliert Beschrei-bung des CAN-Busses ist in dem Controller Area Network. Standard (CAN) (ISO11898) offenbart.

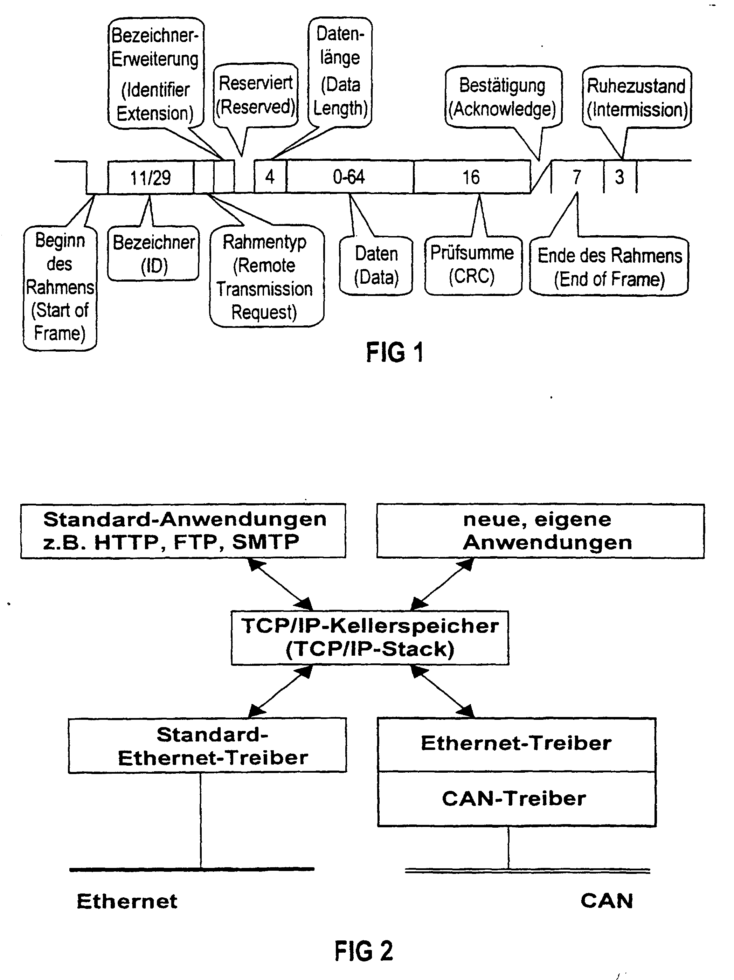

In FIG 1 ist das CAN Frame-Format dargestellt. Der CAN-Bus bietet variable Frame-Längen mit 0 bis 8 Oktetts Nutzdaten, programmierbare Brutto-Übertragungsraten bis zu 1 MBit/s (bei 40 m Segmentlänge, Verringerung der Übertragungsrate bei größerer Ausdehnung des Segments aufgrund fester Bit-Zeiten) und Nachrichten-basierte Adressierung. Letzteres bedeutet, daß nicht einer Station eine netzweite Adresse zugeordnet ist, die als Zieladresse in einem Sendevorgang dient (wie etwa MAC-Adressen bei Ethernet), sondern daß vielmehr jede Nachricht vorne mit einer inhaltsbezogenen Kennung behaftet ist, die anderen Stationen zur Auswahl von Nachrichten dient, die von ihnen empfangen werden sollen. Weil die Nachrichten aus Anwendungssicht als in der CAN-Hardware abgelegte, empfangene oder zu übertragende CAN-Objekte betrachtet werden können, werden die verwendeten Kennungen auch als "CAN Object Identifier" (COB-IDs) bezeichnet. Diese sind entweder 11 bit oder 29 bit lang (Extended CAN). Heute übliche, intelligente CAN Controller, wie das CAN Interface des 80C167-µControllers oder der CAN Controller Intel 82527, sind in der Lage, gleichzeitig verschiedene Sende- und Empfangs-IDs in ihren Hardware-Puffern zu konfigurieren, deren eigentlicher Sende- bzw. Empfangsvorgang ohne Zutun eines Prozessors abgewickelt wird. Zusammen mit den herausragenden Fehlererkennungs- und - behandlungsverfahren erreicht der CAN-Bus damit einen atomaren Multicast der gesendeten Nachricht.

Die verwendete COB-ID einer Nachricht stellt gleichzeitig eine Priorität dar: je niedriger die COB-ID ist, umso höher wird die Priorität der Nachricht angesehen. Die Priorität dient der Bus-Arbitrierung, d.h. der Lösung von Zugangskonflikten bei zeitgleichem Sendewunsch verschiedener Knoten. Die Konfliktauflösung geschieht, im Gegensatz zu sonst üblichen Verfahren, während der Übertragung, ohne dabei eine Zerstörung der Nachricht hervorzurufen. Vielmehr setzt sich die höchstpriore Nachricht durch Verwendung sogenannter dominanter (logisch 0) und rezessiver Pegel (logisch 1) automatisch auf dem Bus durch. Für niederpriore Nachrichten, die auf diese Weise zurückgestellt wurden, versuchen die Knoten selbständig eine erneute Übertragung zum nächstmöglichen Zeitpunkt.

Da die Zuordnung einer COB-ID normalerweise zu der inhaltlichen Bedeutung der versendeten Daten (z.B. Rotationsgeschwindigkeit Vorderrad links) und nicht zum sendenden oder empfangenden Knoten erfolgt, ergibt sich auch das Verbot für zwei verschiedene Knoten, zum selben Zeitpunkt ein CAN-Paket mit derselben COB-ID zu versenden. Innerhalb des CAN-Protokolls ist dies nicht gestattet, da sich die beiden Nachrichten überlagern und zu einem nicht definierten oder zumindest fehlerhaften Zustand auf dem Bus führen würden.

Der verfolgte Ansatz sieht vor, existierende TCP/IP-Stacks (wie z.B. unter PC/Windows NT) zu verwenden und den CAN-Bus als ein Ethernet erscheinen zu lassen. Dazu werden Ethernet Frames, wie sie üblicherweise an einen Ethernet-Treiber übergeben werden, in Stücken über den CAN-Bus transportiert. Daher ist ein Übertragungsprotokoll zu entwickeln, das Ethernet Frames durch geeignete Folgen von CAN-Paketen zwischen den beteiligten Stationen überträgt. Die für das zu entwickelnde Übertragungsprotokoll relevanten Informationen müssen dabei aus den Ethernet Headern der zu sendenden Frames extrahiert werden.

Die resultierende Grobarchitektur ist in FIG 2 dargestellt. Die zu entwickelnden Komponenten bestehen prinzipiell aus einer CAN-Treiber-Schicht zum Umgang mit der CAN-Hardware und einer Ethernet-Treiber-Schicht, die nach unten mit dem CAN-Treiber kommuniziert und nach oben mit dem TCP/IP-Stack interagiert.

Die dargestellte Architektur bringt große Vorteile mit sich. Gelingt die Emulation eines Ethernet-Segments vollständig, so ist die Übertragung über CAN für den TCP/IP-Stack und alle darauf aufsetzenden Applikationsprotokolle völlig transparent. Insbesondere bleiben alle Eigenschaften der IP-Ebene, die der Stack i.d.R. bereitstellt, wie Multicasting, Routing, usw. erhalten. Insgesamt ist damit die nahtlose Integration der Feldebene in überlagerte Netzwerke gegeben.

In diesem Abschnitt werden die grundlegenden Eigenschaften von IP-Paketen, wie sie von überlagerten Protokollen wie TCP oder UDP erzeugt werden, und Ethernet Frames skizziert, auf die IP-Pakete in LAN-Umgebungen typischerweise abgebildet werden. Für Details sei auf eines der zahlreichen Lehrbücher zu TCP/IP verwiesen.

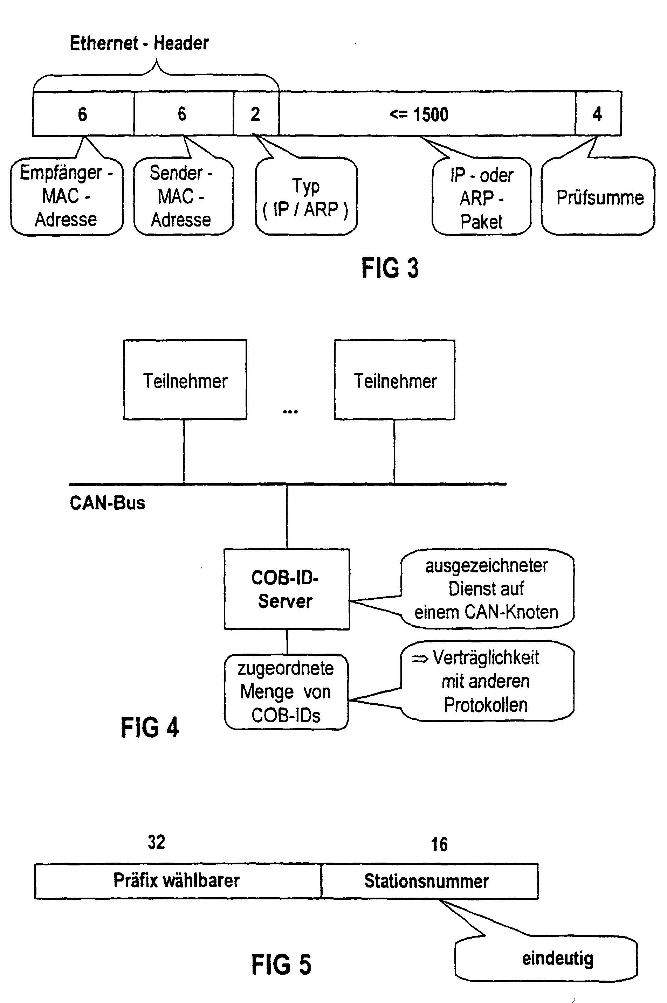

Die auf der Transportebene von der sendenden Applikation zu verschickenden Daten werden i.d.R. über die Socket-Schnittstelle als TCP-Stream bzw. UDP-Pakete an den TCP/IP-Stack übergeben und dort in IP-Pakete der Netzwerkebene zerlegt bzw. verpackt. Jedes IP-Paket wird unter Beachtung von Maximallängen als Ethernet-Frame an die unterlagerte Link-Layer-Schicht weitergereicht. Wie aus FIG 3 ersichtlich, enthält der Ethernet-Header insbesondere die Zieladresse des Frames auf dem Ethernet-Medium. Sie wird als Media Access Control-Adresse (MAC-Adresse) bezeichnet und besteht gemäß dem Standard IEEE 803.2 aus einer für jeden jemals produzierten Ethernet-Netzwerkadapter eindeutigen 48-bit-Kennung. Das zweite Feld, das im Ethernet Header betrachtet werden muß, ist das ether_type-Feld, in dem die Art des im Ethernet-Frame enthaltenen Pakets definiert ist. Es werden hier die Typen ETHERTYPE_IP für IP-Pakete und ETHERTYPE_ARP betrachtet; letzteres wird durch das in den TCP/IP-Stack integrierte Address Resolution Protocol (ARP) zur Abbildung von IP-Adressen auf Ethernet-MAC-Adressen verwendet.

Ein Grundproblem ist die Zuordnung zwischen den MAC-Adressen der Ethernet Frames und den CAN COB-IDs, wie sie von der CAN-Hardware für die Übertragung verwendet werden. Hierfür wird im folgenden eine Lösung angegeben.

Der grundlegende Unterschied einer stationsorientierten Adressierung auf Ethernet-Seite im Gegensatz zu nachrichtenorientierter Adressierung innerhalb des CAN-Protokolls wurde bereits geschildert.

Zur Realisierung einer transparenten IP-Kommunikation zwischen den Teilnehmerknoten muß demnach eine eindeutige Adressierung einzelner Stationen realisiert werden. Darüber hinaus sieht der Ethernet-Standard die Möglichkeit von Broadcasts und Multicasts vor, von Ethernet-Frames also, die an alle oder eine Teilmenge der am Medium angeschlossenen Stationen gleichzeitig gerichtet sind.

CAN-basierte Netzwerkknoten sind hingegen generell in der Lage, jedes beliebige über den Bus gesendete CAN-Paket zu empfangen, sofern einer der Empfangspuffer in der Hardware für den betreffenden CAN-Identifier der Nachricht konfiguriert ist. Dabei muß keine eindeutige Zuordnung zu einem Puffer erfolgen, da die verwendete Hardware auch Puffer enthält, deren Akzeptanz für einen Identifier über ein Register maskierbar ist, so daß alle COB-IDs, die ein bestimmtes Bitmuster enthalten oder sogar jeder beliebige CAN-Identifier von dem Empfangspuffer akzeptiert wird. Ebenso ist jede Station in der Lage, CAN-Pakete mit verschiedenen, frei wählbaren COB-IDs zu versenden, indem entsprechende Sendepuffer konfiguriert werden.

Ein einfacher, naiver Ansatz für die Abbildung der Ethernet-Adressierung besteht darin, jedem Teilnehmer eine feste COB-ID zuzuweisen. Dies kann jedoch keine stationsbezogene Empfangsadresse sein, da damit das Verbot verletzt würde, zwei CAN-Nachrichten mit derselben ID gleichzeitig auf den Bus zu legen, falls die betreffende Station zum selben Zeitpunkt Nachrichten von zwei verschiedenen Knoten erhalten soll. Damit bliebe die Zuweisung der Senderkennung als die einem Knoten eindeutig zugeordnete ID. Die als Empfänger adressierte Station könnte dann aber nur noch im Datenteil der CAN-Nachricht kodiert werden; zur Feststellung, daß sie selbst angesprochen wurde, müßte eine Station also die Gesamtheit aller versendeten Nachrichten zunächst empfangen, den Inhalt auswerten und die an andere Stationen gerichteten Pakete verwerfen. Zu der maximal erhöhten Systemlast käme außerdem die Notwendigkeit, in den mit 8 Bytes ohnehin knapp bemessenen Nutzdaten eines jeden Pakets die Adresse der Zielstation unterzubringen.

Erfindungsgemäß wird ein Modell entwickelt (vgl. FIG 4), das die genannten Probleme vermeidet, dafür aber einen Knoten in einem CAN-Segment als zentrale Instanz benötigt.

Bei diesem Knoten handelt es sich um den sogenannten COB-ID-Server, der die Menge der verwendbaren COB-IDs verwaltet. Die Menge der für die Ethernet-Emulation verwendbaren COB-IDs kann frei festgelegt werden. Dadurch ist die geforderte Ver-träglichkeit mit anderen CAN-Protokollen auf dem CAN-Bus gewährleistet. Für den Transport der Nutzdaten, die Ethernet-Frames bilden, wird jedem Paar miteinander kommunizierender Knoten jeweils ein Paar von COB-IDs zugeordnet; für die Durchführung von Broadcasts erhält jeder sendewillige Knoten jeweils eine COB-ID vom COB-ID-Server. Die betroffenen Empfänger verfolgen die Zuteilung von COB-IDs so, daß sie sich auf den Empfang von Paketen mit diesen Identifiern einrichten und somit Pakete, die für andere Stationen bestimmt sind, ignorieren.

Die getroffenen Zuordnungen können ohne weiteres für spätere Kommunikationsvorgänge der Knotenpaare aufrecht erhalten werden; nur bei zunehmender Verknappung der freien COB-IDs muß der COB-ID-Server zugeteilte COB-IDs zurückfordern. Das Protokoll zur Verwaltung der COB-IDs wird im folgenden Abschnitt 5 detailliert beschrieben.

Für eine korrekte Initialisierung muß dennoch jeder Teilnehmerknoten innerhalb der Ethernet-Emulation eines CAN-Segments eine eindeutige Stationsadresse besitzen, die bereits zum Installationszeitpunkt festgelegt wird. Diese Adresse dient zur Identifikation des Knotens innerhalb der Initialisierungsphase des Protokolls zwischen dem Knoten und dem COB-ID-Server.

Hierzu wurde ein vorzeichenloser 16-bit-Wert gewählt, so daß ein theoretisches Maximum von 64k Knoten adressiert werden kann. Gleichzeitig bildet dieser Wert die unteren 16 Bits der Ethernet-MAC-Adresse der Station im Rahmen der Emulation; die höherwertigen Bits werden auf einen festen Präfix gesetzt, z.B. 0 (vgl. FIG 5). Da es sich hierbei nur um eine Ethernet-Emulation und nicht um das tatsächliche Medium handelt, können diese MAC-Adressen nicht mit denen "echter" Ethernet-Adapter an einem Segment in Konflikt geraten.

Die in den Teilnehmerknoten integrierte Ethernet-Emulationsschicht und die Applikation des COB-ID-Servers implementieren zusammen ein Protokoll, das die Zuweisung von COB-IDs für verschiedene Zwecke erlaubt sowie die Flußkontrolle im Kommunikationsablauf zwischen den Knoten regelt. Die Ethernet-Schicht der Teilnehmerknoten agiert als Protokollschicht zwischen der TCP/IP-Implementierung und dem CAN-Treiber (vgl. FIG 1).

Ihre Aufgaben bestehen in der Abbildung der Ethernet-MAC-Adressen auf COB-IDs, der Segmentierung und Reassemblierung von Ethernet Frames in CAN-Pakete sowie der Verwaltung der zugehörigen CAN-Objekte in der Hardware mit Hilfe des CAN-Treibers.

Aufgabe des COB-ID-Servers (im weiteren, soweit eindeutig, als "Server" bezeichnet) sind Speicherung und Organisation der Verwaltungsinformationen für die Abwicklung des Protokolls zwischen den Teilnehmerknoten, insbesondere zur korrekten und effizienten Nutzung von COB-IDs für die Übertragung von Ethernet Frames.

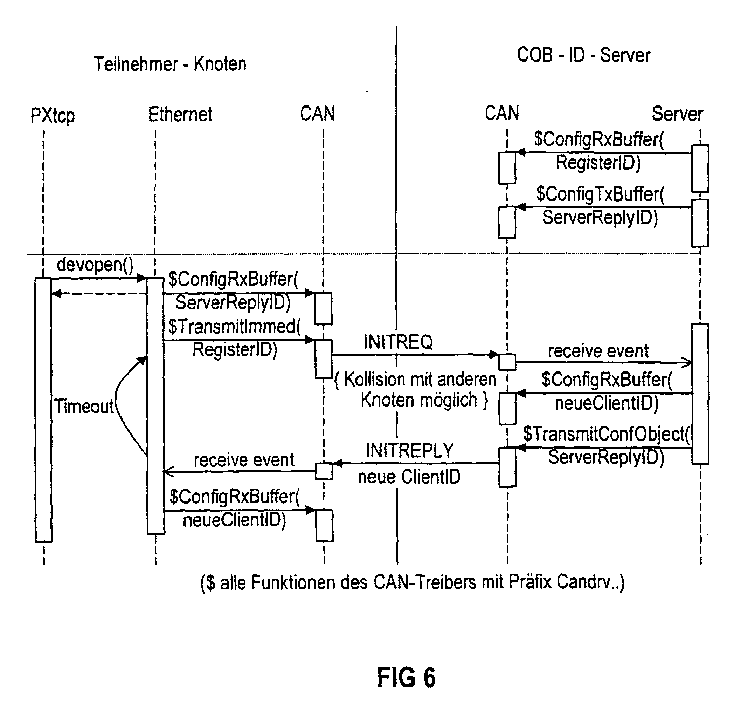

Bestandteil des COB-ID-Server-Protokolls ist ein dynamisches Initialisierungsprotokoll, mit dem sich ein neuer Teilnehmer beim COB-ID-Server registriert. Der Ablauf ist in FIG 6 dargestellt.

Sobald sich ein Teilnehmerknoten lokal initialisiert hat, sendet er eine Registrierungsanforderung mit einer well-known COB-ID an den COB-ID-Server. Diese well-known COB-ID ist zum Entwurfszeitpunkt festgelegt und wird von allen Teilnehmern für die Registrierung verwendet. Insofern kann es theoretisch, nämlich bei zeitgleicher Registrierungsanforderung durch mehrere Teilnehmer, zu einer Kollision kommen, die auf dem CAN-Bus zu einer erkannten, fehlerhaften Übertragung führt. Zur Auflösung des Konflikts wird entsprechend dem CSMA/CD-Verfahren vorgegangen.

Bei erfolgreicher Registrierung teilt der Server dem sich registrierenden Teilnehmer eine private, eindeutige COB-ID zu, die die Teilnehmerstation für jede weitere Kommunikation mit dem Server verwendet. In dieser Antwortnachricht sowie in weiteren Steuernachrichten verwendet der Server eine zweite well-known COB-ID, für die alle Knoten, die an dem Protokoll teilnehmen, ständig empfangsbereit sein müssen, um Statusmeldungen oder Steuernachrichten entgegenzunehmen. Dies bedeutet aber auch, daß jede Nachricht des Servers von allen Knoten empfangen wird (Multicast). Die Empfänger müssen jeweils anhand des Paketinhalts auswerten, ob sie von der Nachricht betroffen sind. Der hierdurch erzeugte Aufwand ist aufgrund der im Verhältnis zu Nutzdatenübertragungen selten stattfindenden Multicast-Übertragung von Steuernachrichten als gering anzusehen.

Die beiden betrachteten well-known COB-IDs sind die beiden einzigen, zum Installationszeitpunkt systemweit festgelegten Identifier, die durch das "IP über CAN"-Protokoll reserviert sind. Alle im weiteren verwendeten COB-IDs werden vom Server zugeteilt und können nach Gebrauch bei Bedarf wieder entzogen werden. Für die dabei zur Verfügung stehenden COB-IDs sind derzeit im Server-Code feste Bereiche vorgegeben. Eine dynamische Festlegung entsprechender COB-ID-Pools, etwa zum Initialisierungszeitpunkt des Servers, kann insbesondere die Bedürfnisse der sonstigen am CAN-Bus koexistierender Anwendungen berücksichtigen. Damit ist die Anforderung nach Verträglichkeit des Protokolls mit anderen CAN-Protokollen in optimaler Weise gegeben.

Im weiteren werden Sendeaufträge der höheren Protokollschicht für Ethernet Frames und die daraus resultierenden Vorgänge im COB-ID-Server-Protokoll betrachtet. Wird in einem Teilnehmerknoten ein Ethernet Frame zum Senden übergeben, so wird zunächst die Zieladresse im Ethernet Header überprüft und abhängig davon, ob es sich um eine reale Stationsadresse oder um eine Broadcast-Adresse handelt, verfahren. (Eine ebenfalls mögliche Multicast-Adresse kann wie eine Broadcast-Übertragung behandelt werden und wird im folgenden nicht weiter betrachtet).

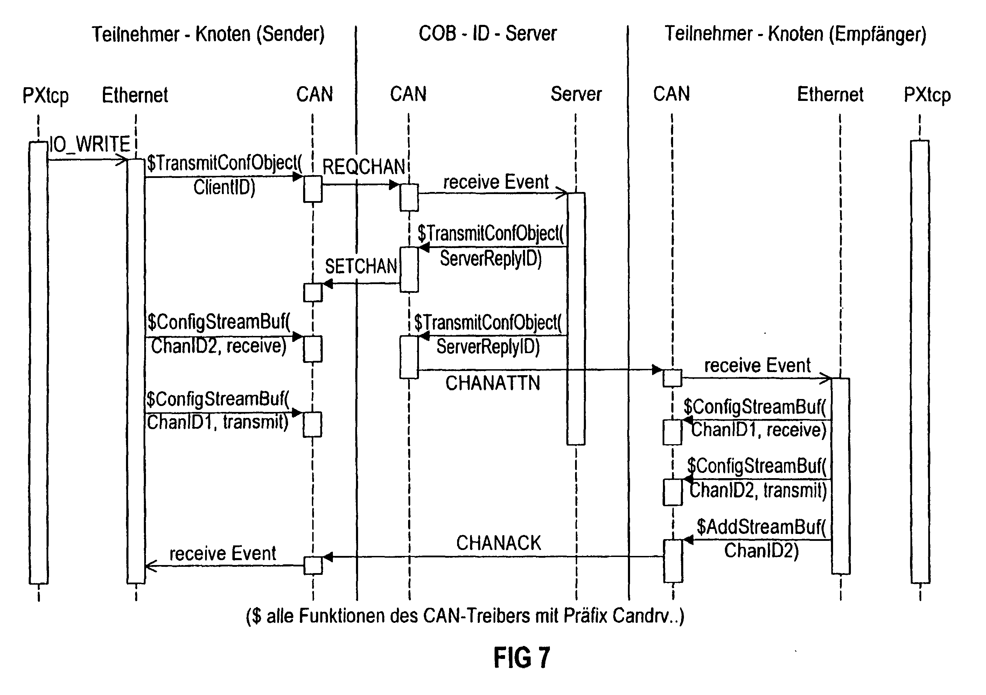

Eine Punkt-zu-Punkt-Übertragung eines Ethernet Frames an eine bestimmte Station mit gegebener MAC-Adresse beginnt mit der Anforderung eines COB-ID-Paares vom COB-ID-Server, wie in FIG 7 dargestellt. Die Zuteilung der zu verwendenden COB-ID erfolgt, wie oben beschrieben, über die well-known COB-ID und wird auch von allen anderen Stationen am Bus registriert, aber nur von der Partnerstation des Senders berücksichtigt, die sich für den ersten Identifier empfangsbereit macht und daraufhin ein CAN-Paket, adressiert mit der zweiten zugeteilten COB-ID als Bestätigung an die erste Station sendet, die sich für diesen Identifier empfangsbereit gemacht hat. Nun kann die Übertragung des Ethernet Frames vonstatten gehen.

Der sendende Knoten beginnt die Übertragung des Ethernet-Frames mit einem ersten CAN-Paket, das die Länge des Ethernet Frames und die ersten Nutzdaten enthält. Alle anderen Knoten empfangen dieses und die unmittelbar ohne weitere Kontrollinformationen folgenden CAN-Pakete und fügen diese zu einem empfangenen Ethernet Frame zusammen. Ist die Übertragung des Frames vollständig, wird er an die oberen Netzwerkschichten weitergereicht.

Handelt es sich um ein Broadcast-Paket, wird ähnlich wie im Fall einer Punkt-zu-Punkt-Übertragung verfahren. Der sendende Teilnehmerknoten beantragt vom COB-ID-Server eine Broadcast-COB-ID. Die Zuteilung der zu verwendenden COB-ID erfolgt wiederum über die well-known COB-ID und wird von allen anderen Stationen am Bus registriert, die sich in diesem Falle alle auf den Empfang des Broadcast-Frames mit der neuen COB-ID konfigurieren können.

Die für einen bestimmten Zweck zugeteilten COB-IDs können bei erneuter Kommunikation desselben Stationspaares wiederverwendet werden, bis der COB-ID-Server sie aus Mangel an verfügbaren COB-IDs zurückfordert. Auch bei einer Punkt-zu-Punkt-Übertragung in umgekehrter Richtung zu einer vorangegangenen Übertragung wird das zugeteilte COB-ID-Paar verwendet, entscheidend sind alleine die teilnehmenden Stationen. Gleiches gilt für erneute Broadcasts.

Die Rückforderung einer vom COB-ID-Server vergebenen COB-ID bzw. eines Paares wird eingeleitet, wenn die Anzahl der zur Vergabe im COB-ID-Server noch zur Verfügung stehenden COB-IDs einen kritischen Wert unterschreitet. Reihenfolge und Umfang der Rückforderung sind strategieabhängig implementierbar. Eine einfache, bisher realisierte Implementierung bedient sich eines FIFO-Algorithmus. Eine zeitliche COB-ID-Server-seitige Überwachung der tatsächlichen Nutzung von vergebenen COB-IDs durch die Teilnehmerknoten ist möglich und kann dem COB-ID-Server als Grundlage für z.B. einen LRU-Algorithmus zur Auswahl der Rückforderungen dienen. Zur Einleitung einer Rückforderung sendet der COB-ID-Server für jede betroffene Station eine Rückgabe-Aufforderung, die die Stationsadresse des Knotens und die betreffende COB-ID enthält. Eine noch über den entsprechenden Kanal laufende Paketübertragung kann von den Knoten abgeschlossen werden, bevor die Rückgabe der COB-ID jeweils vom darauf sendenden Knoten mit einer Rückgabe-Antwort an den COB-ID-Server bestätigt wird. Schließlich fuhrt der COB-ID-Server die zurückgegebenen COB-IDs wieder seinem Vorrat der vergebbaren COB-IDs zu und quittiert die erfolgte Rücknahme mit einer entsprechenden Kontrollnachricht. Daraufhin können die zugehörigen Sende- und Empfangsobjekte von den Knoten deinitialisiert und Einträge in den lokalen Zuordnungstabellen entfernt werden. Die Quittierung durch den COB-ID-Server ist vorgesehen, um zu verhindern, daß ein Knoten seine Empfangsbereitschaft für eine COB-ID verliert, bevor die Gegenstelle alle Sendevorgänge auf dieser ID eingestellt hat. Der geschilderte Vorgang für ein COB-ID-Paar gilt entsprechend auch für zu Broadcast-Zwecken vergebene COB-IDs, wobei in diesem Fall nur ein Knoten und der COB-ID-Server beteiligt sind.

## Patentansprüche

1. Verfahren zum Übertragen von Ethernet-Frames durch geeignete Folgen von Datenpaketen eines weiteren Übertragungsprotokolls, wobei die für das Übertragungsprotokoll relevanten Informationen aus einem Header des Ethernet-Frames extrahiert werden, **dadurch gekennzeichnet, daß**
- eine zentrale Instanz (CAN Object Identifier-Server) eine Menge verwendbarer CAN, Controller Area Network, Object Identifiers verwaltet,
- die zentrale Instanz (CAN Object Identifier-Server) jedem Paar kommunizierender Knoten, zwischen denen Ethernet-Frames übertragen werden, ein Paar CAN, Controller Area Network, Object Identifiers zuordnet.

2. Verfahren nach Anspruch 1, **dadurch gekennzeichnet, daß** die zentrale Instanz (CAN Object Identifier-Server) bei zunehmender Verknappung von freien CAN Object Identifiers zugeordnete CAN Object Identifiers zurückfordert.

3. Verfahren nach Anspruch 1 oder 2, **dadurch gekennzeichnet, daß** ein Teilnehmerknoten eine Registrierungsanforderung an die zentrale Instanz (CAN Object Identifier-Server) sendet und die zentrale Instanz (CAN Object Identifier-Server) dem Teilnehmerknoten einen privaten eindeutigen CAN Object Identifier zuteilt.

4. Verfahren nach Anspruch 1 oder 2, **dadurch gekennzeichnet, daß** die zentrale Instanz (CAN Object Identifier-Server) zur Übermittlung von Steuernachrichten an einen oder mehrere Teilnehmerknoten eine Kennung verwendet, für die alle Stationen ständig empfangsbereit sind.

## Claims

1. Method for transmitting Ethernet frames through suitable sequences of data packets of a further transmission protocol, with the information relevant for the transmission protocol being extracted from a header of the Ethernet frame, **characterized in that**
- a central entity (CAN Object Identifier Server) administers a number of usable CAN (Controller Area Network) object identifiers,
- the central entity (CAN Object Identifier Server) assigns to each pair of communicating nodes between which Ethernet frames will be transmitted a pair of CAN (Controller Area Network) object identifiers.

2. Method in accordance with Claim 1, **characterized in that** the central entity (CAN Object Identifier Server) requests the return of assigned CAN Object Identifiers as the supply of free CAN Object Identifiers becomes scarce.

3. Method in accordance with Claim 1 or 2, **characterized in that** a subscriber node sends a registration request to the central entity (CAN Object Identifier Server)and the central entity (CAN Object Identifier Server) allocates a private unique CAN Object Identifier to the subscriber node.

4. Method in accordance with Claim 1 or 2, **characterized in that** the central entity (CAN Object Identifier Server), to transfer control messages to one or more subscriber nodes, uses a code for which each of a plurality of stations is continuously receive-ready.

## Revendications

1. Procédé pour la transmission de trames Ethernet au moyen de suites appropriées de paquets de données d'un autre protocole de transmission, les informations déterminantes pour le protocole de transmission étant extraites d'un en-tête de la trame Ethernet, **caractérisé par le fait que**
- une instance centrale (CAN Object Identifier-Server) gère un ensemble d'identificateurs d'objets CAN, Controller Area Network, utilisables, et
- l'instance centrale (CAN Object Identifier-Server) attribue à chaque couple de noeuds qui communiquent, entre lesquels des trames Ethernet sont transmises, un couple d'identificateurs d'objets CAN, Controller Area Network.

2. Procédé selon la revendication 1, **caractérisé par le fait que** l'instance centrale (CAN Object Identifier-Server) retire des identificateurs d'objets CAN attribués s'il manque de plus en plus d'identificateurs d'objets CAN libres.

3. Procédé selon la revendication 1 ou 2, **caractérisé par le fait qu'**un noeud d'abonné envoie une demande d'inscription à l'instance centrale (CAN Object Identifier-Server) et que l'instance centrale (CAN Object Identifier-Server) attribue au noeud d'abonné un identificateur d'objet CAN privé unique.

4. Procédé selon la revendication 1 ou 2, **caractérisé par le fait que** l'instance centrale (CAN Object Identifier-Server) utilise, pour la transmission de messages de commande à un ou plusieurs noeuds d'abonnés, un identificateur pour lequel toutes les stations sont constamment prêtes à recevoir.
